# EUROPÄISCHE PATENTSCHRIFT

(11) **EP 3 204 254 B1**
(45) Veröffentlichungstag und Bekanntmachung des Hinweises auf die Patenterteilung: **17.03.2021**
(21) Anmeldenummer: 15775438.3
(22) Anmeldetag: 05.10.2015
(51) Int. Cl.: B60K 35/00, B60K 37/02

(54) **ANZEIGEEINRICHTUNG**
DISPLAY DEVICE
DISPOSITIF D'AFFICHAGE

(30) Priorität: 08.10.2014 DE 102014220348
(43) Veröffentlichungstag der Anmeldung: 16.08.2017
(73) Patentinhaber: Continental Automotive GmbH, 30165 Hannover (DE)
(72) Erfinder: MÖLLER, Jochen, 64289 Darmstadt (DE); KÄPPELER, Thomas, 63303 Dreieich (DE); GONZALEZ, Humberto, Lake Orion, MI (US)
(74) Vertreter: Continental Corporation
(86) Internationale Anmeldenummer: PCT/EP2015/072956
(87) Internationale Veröffentlichungsnummer: WO 2016/055420

(56) Entgegenhaltungen:
- DE-A1-102005 036 009
- DE-A1-102012 004 635
- US-A1- 2008 278 803
- US-A1- 2012 287 664

## Beschreibung

Die Erfindung bezieht sich auf eine Anzeigeeinrichtung gemäß Anspruch 1mit einer Anzeigeebene, in der mehrere flächige Anzeigebereiche angeordnet sind, wobei die Anzeigebereiche durch eine transparente Abdeckungen abgedeckt sind.

Bei derartigen Anzeigeeinrichtungen sind für einen Beobachter die Anzeigebereiche in einer Ebene zu sehen.

Aus der DE 10 2012 004 639 A1, der US 2008/278803 A1 und der US 2012/287664 A1 sind Anzeigeeinrichtungen mit einem einzigen Anzeigebereich bekannt. Die DE 10 2005 036 009 A1 offenbart eine Anzeigeeinrichtung gemäß Oberbegriff des Anspruchs 1.

Aufgabe der Erfindung ist es, eine verbesserte Anzeigeeinrichtung der eingangs genannten Art zu schaffen.

Diese Aufgabe wird erfindungsgemäß dadurch gelöst, dass eine einzige transparente Abdeckung alle flächigen Anzeigebereiche der Anzeigeeinrichtung abdeckt und auf ihrer Beobachterseite dreidimensional mit Bereichen unterschiedlicher Dicke ausgebildet ist sowie mit ihrer der Beobachterseite abgewandten Seite mittels optical bonding mit den flächigen Anzeigebereichen verbunden ist, wobei der Brechungsindex des Materials der Abdeckung dem Brechungsindex des optical-bonding Materials entspricht.

Durch diese Ausbildung wird ein Luftspalt zwischen den flächigen Anzeigebereichen und der transparenten Abdeckung vermieden, so dass es zwischen diesen Teilen nicht zu einer Lichtbrechung kommt. Dies führt dazu, dass die Bildebene der flächigen Anzeigebereiche in den Bereichen größerer Dicke gegenüber den Bereichen geringerer Dicke für den Beobachter optisch als zu ihm hervorgehoben erfasst werden, so dass die verschiedenen Bildebenen dem Beobachter einen dreidimensionalen Eindruck vermitteln. Ein optisches Hervorheben erfolgt etwa um ein Drittel der jeweiligen Dicke der Abdeckung.

Der Beobachter kann die optisch unterschiedlich hervorgehobenen Bereiche aber auch haptisch an der Oberflächenstruktur der Abdeckung erfassen.

Da die transparente Abdeckung die Anzeigeebene vollständig abdeckt, wird eine nahtlose Oberfläche der Abdeckung über die Anzeigeebene erreicht und optische Störungen durch Trennspalte vermieden.

Die flächigen Anzeigebereiche können durch auf eine Trägerplatte aufgebrachte Ziffern und/oder Zeichen und/oder Symbole gebildet sein, wobei die flächigen Anzeigebereiche ein oder mehrere Zifferblätter sein können, die Skalen aufweisen können. Derartige Anzeigeeinrichtungen sind vorteilhaft bei Kombinationsinstrumenten in Fahrzeugen anwendbar.

Dabei kann die transparente Abdeckung und die Trägerplatte den Skalen zugeordnete Durchführöffnungen aufweisen, durch die drehbar antreibbare Zeigerachsen hindurchgeführt sind, die beobachterseitig Zeiger tragen.

Die flächigen Anzeigebereiche können auch durch mehrere optoelektronische Displays gebildet sein.

Als optische Displays sind z. B. die verschiedenartigsten Flüssigkristallanzeigen geeignet.

Erfindungsgemäß weist einfach montierbar die Trägerplatte eine Ausnehmung auf, die von dem flächigen Anzeigebereich des elektrooptischen Displays überdeckt ist.

Die flächigen Anzeigebereiche sind vorzugsweise beobachterseitig in einer Ebene angeordnet.

Dadurch kann auch die dem Beobachter abgewandte Seite der transparenten Abdeckung in einer Ebene sich erstrecken, was einfach herstellbar ist und auch zu einer sicher luftspaltlosen Verbindung des optical-bonding-Materials mit den Anzeigebereichen führt.

Eine einfach herstellbare Ausführungsform für die transparente Abdeckung besteht darin, dass die transparente Abdeckung ein Spritzgußbauteil ist.

Dazu ist Polymethylmethacrylat ein geeignetes Material.

Eine andere ebenfalls einfach herstellbare Ausführungsform der transparenten Abdeckung besteht darin, dass die transparente Abdeckung eine tiefgezogene transparente Folie aufweist, deren Vertiefungen auf der einem Beobachter abgewandten Seite mit optical-bonding-Material ausgefüllt sind.

Die Folie kann aus einem Polcarbonat bestehen oder auch ein tiefziehbares Glas sein.

Bei dieser Ausführungsform sind auch Bereiche besonders geringer Dicke erzeugbar.

Dabei erfüllt das optical-bonding-Material eine Doppelfunktion, indem es nicht nur zum Verbinden der transparenten Abdeckung dient, sondern auch das Material der transparenten Abdeckung ist.

Um einen sogenannten "black-panel-Effekt" zu erzeugen, kann die transparente Abdeckung eine getönte Abdeckung sein, so dass für einen Beobachter immer nur die jeweils hinterleuchteten Anzeigebereiche zu sehen sind.

Ist die transparente Abdeckung ein Spritzgussbauteil, so kann die getönte Abdeckung eine entsprechende Beschichtung des Spritzgussbauteils sein.

Ein solcher zusätzlicher Arbeitsgang kann wegfallen, wenn die transparente Abdeckung aus einer tiefgezogenen transparenten Folie aus getöntem Material besteht, deren Vertiefungen auf der einem Beobachter abgewandten Seite mit optical-bonding-Material ausgefüllt sind.

Ein Ausführungsbeispiel der Erfindung ist in der Zeichnung dargestellt und wird im Folgenden näher beschrieben. Es zeigen:

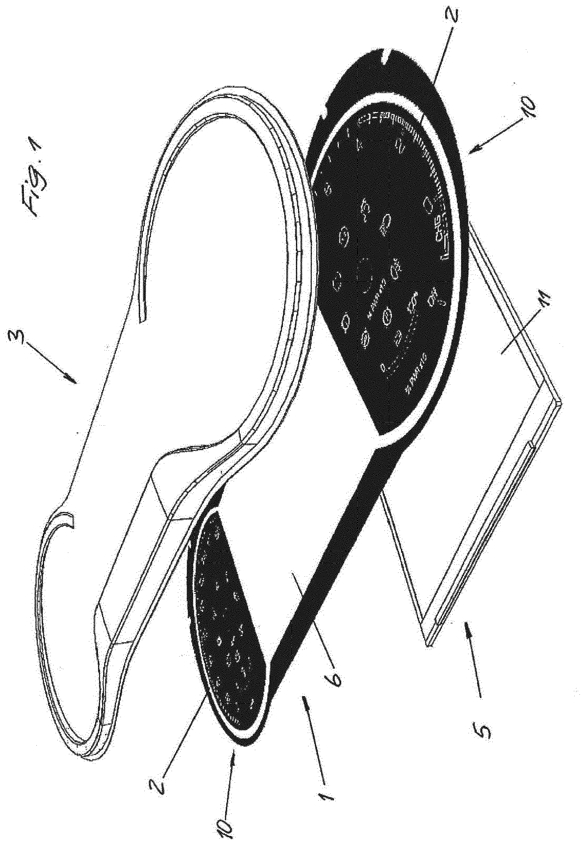

- Figur 1: eine perspektivische Explosionsdarstellung einer Anzeigeeinrichtung,

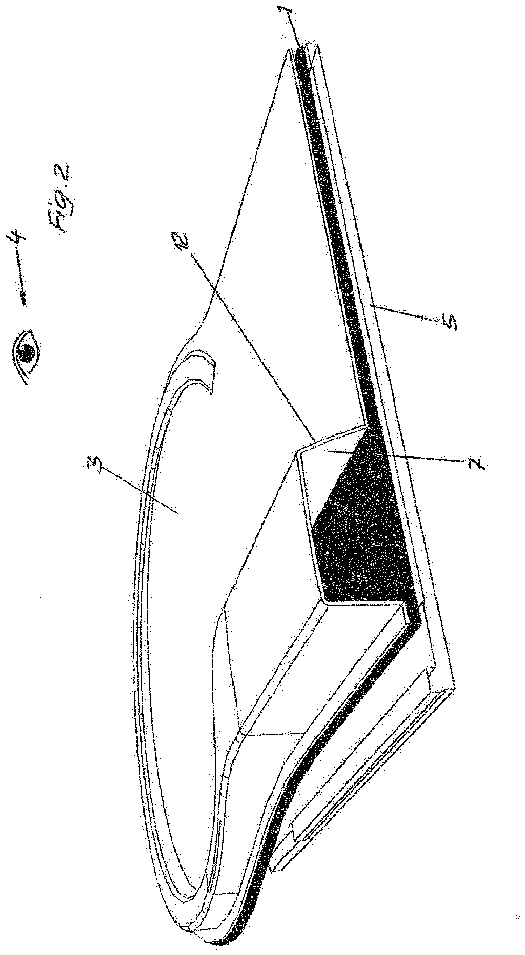

- Figur 2: eine perspektivische Darstellung der Anzeigeeinrichtung im Querschnitt ohne optical-bonding-Material,
- Figur 3: eine perspektivische Darstellung der Anzeigeeinrichtung im Querschnitt mit optical-bonding-Material.

Die dargestellte Anzeigeeinrichtung weist eine dünne Trägerplatte 1 auf, auf die in Negativdarstellung erste Anzeigebereiche 10 bildend zwei Skalen 2 für Zeigerinstrumente in einem Abstand zueinander und innerhalb der Skalen 2 weitere Anzeigesymbole und Bargraphs aufgebracht sind.

Die Trägerplatte kann folienartig ausgebildet sein.

Beobachterseitig ist vor der Trägerplatte 1 eine transparente Abdeckung 3 und auf der einem Beobachter 4 abgewandten Seite ein optoelektronisches Display 5 wie z. B. ein TFT-Display angeordnet.

Der zweite Anzeigebereich 11 des Displays 5 überdeckt eine rechteckige Ausnehmung 6 in der Trägerplatte 1.

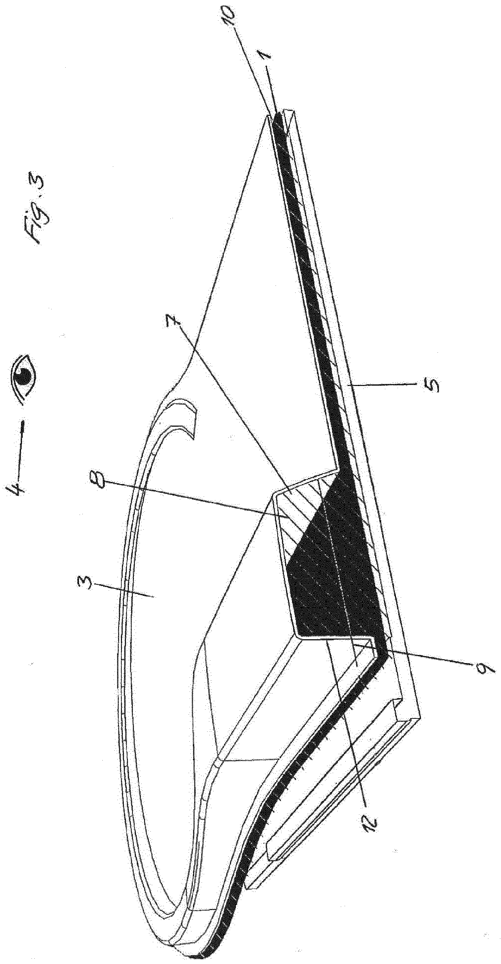

Die transparente Abdeckung 3 besteht aus einer transparenten Kunststofffolie 12, die in einem Tiefziehverfahren dreidimensional ausgebildet wurde. Anschließend wurde die tiefgezogene Kunststofffolie 12 mit ihrer dem Beobachter 4 abgewandten Seite nach oben zeigend waagrecht positioniert und die Vertiefungen 7 der Kunststofffolie 12 bündig mit einem in Figur 3 schraffiert dargestelltem optical-bonding-Material 8 ausgefüllt sowie die gesamte Fläche der transparenten Abdeckung 3 auf ihrer dem Beobachter 4 abgewandten Seite mit dem optical-bonding-Material 8 beschichtet.

Danach wurden die Trägerplatte 1 sowie das Display 5 mit ihren Anzeigebereichen 10 und 11 zur Beobachterseite gerichtet auf die dem Beobachter 4 abgewandten Seite der transparenten Abdeckung 3 so aufgelegt, dass ohne Lufteinschlüsse die Trägerplatte 1 und das Display 5 mit der transparenten Abdeckung 3 verbunden werden.

Da der Brechungsindex des Materials der Abdeckung 3 zumindest weitgehend dem Brechungsindex des optical-bonding-Materials 8 entspricht, kommt es zwischen diesen Teilen nicht zu einer Lichtbrechung.

Dadurch werden die Bildebenen der flächigen Anzeigebereiche 10, 11 von Trägerplatte 1 und Display in den Bereichen größerer Dicke der transparenten Abdeckung 3 gegenüber den Bereichen geringerer Dicke für den Beobachter 4 optisch als zu ihm hervorgehoben erfasst, so dass die verschiedenen Bildebenen 9, 13 dem Beobachter 4 einen dreidimensionalen Eindruck vermitteln. Die optische Hervorhebung erfolgt um etwa ein Drittel der jeweiligen Dicke der transparenten Abdeckung 3.

Wie in Figur 3 dargestellt, ist die Bildebene 9 im Bereich der Vertiefung 7 im mittleren Bereich der Abdeckung 3 gegenüber der Bildebene 10 im keine Vertiefung aufweisenden Bereich hervorgehoben.

Zentrisch zu den Skalen 2 sind in der Trägerplatte 1 und der transparenten Abdeckung 3 nicht dargestellte Durchführöffnungen ausgebildet, durch die Zeigerachsen hindurchgeführt werden können, auf die beobachterseitig vor der transparenten Abdeckung 3 Zeiger aufsetzbar sind. Die Zeigerachsen von ebenfalls nicht dargestellten, hinter der Trägerplatte 1 anordenbaren Schwenkantrieben schwenkbar antreibbar.

Die Kunststofffolie 12 ist eine getönte Kunststofffolie, so dass die Abdeckung 3 eine getönte Abdeckung ist und einen "black-panel-Effekt" bewirkt. Die Anzeigeeinrichtung weist auf der dem Beobachter 4 abgewandten Seite nicht dargestellt eine oder mehrere Lichtquellen auf. Nur die Anzeigebereiche 10, 11, die von den Lichtquellen hinterleuchtet werden, sind für den Beobachter 4 sichtbar.

## Patentansprüche

1. Anzeigeeinrichtung mit:
- einer Trägerplatte (1) mit einer Ausnehmung (6) und räumlich getrennten flächigen ersten Anzeigebereichen (10); und
- einem beobachterseitig hinter der Trägerplatte (1) angeordneten optoelektronischen Display (5) mit einem flächigen zweiten Anzeigebereich (11), der die Ausnehmung (6) in der Trägerplatte (1) überdeckt;
**gekennzeichnet durch :**
- eine transparente Abdeckung (3), die die ersten und zweiten Anzeigebereiche (10, 11) abdeckt und auf ihrer Beobachterseite dreidimensional mit Bereichen unterschiedlicher Dicke ausgebildet ist, wobei Bildebenen (9, 13) der ersten und zweiten Anzeigebereiche (10, 11) in Bereichen größerer Dicke der transparenten Abdeckung (3) gegenüber Bereichen geringerer Dicke für einen Beobachter (4) optisch hervorgehoben werden, und wobei die transparente Abdeckung (3) mittels optical bonding mit der Trägerplatte (1) und dem optoelektronischen Display (5) verbunden ist, wobei der Brechungsindex des Materials der transparenten Abdeckung (3) dem Brechungsindex des optical-bonding-Materials (8) entspricht.

2. Anzeigeeinrichtung nach Anspruch 1, **dadurch gekennzeichnet, dass** die flächigen ersten Anzeigebereiche (10) durch auf eine Trägerplatte (1) aufgebrachte Ziffern und/oder Zeichen und/oder Symbole gebildet sind.

3. Anzeigeeinrichtung nach Anspruch 2, **dadurch gekennzeichnet, dass** die flächigen ersten Anzeigebereiche (10) ein oder mehrere Zifferblätter sind.

4. Anzeigeeinrichtung nach einem der Ansprüche 2 und 3, **dadurch gekennzeichnet, dass** die flächigen ersten Anzeigebereiche (10) Skalen (2) aufweisen.

5. Anzeigeeinrichtung nach Anspruch 4, **dadurch gekennzeichnet, dass** die transparente Abdeckung (3) und die Trägerplatte (1) den Skalen (2) zugeordnete Durchführöffnungen aufweisen, durch die drehbar antreibbare Zeigerachsen hindurchgeführt sind die beobachterseitig Zeiger tragen.

6. Anzeigeeinrichtung nach einem der vorhergehenden Ansprüche, **dadurch gekennzeichnet, dass** die flächigen ersten und zweiten Anzeigebereiche (10, 11) beobachterseitig in einer Ebene angeordnet sind.

7. Anzeigeeinrichtung nach einem der vorhergehenden Ansprüche, **dadurch gekennzeichnet, dass** die Trägerplatte (1) eine dünne Trägerplatte (1) oder eine folienartige Trägerplatte (1) ist.

8. Anzeigeeinrichtung nach einem der vorhergehenden Ansprüche, **dadurch gekennzeichnet, dass** die transparente Abdeckung (3) ein Spritzgussbauteil ist.

9. Anzeigeeinrichtung nach einem der Ansprüche 1 bis 7, **dadurch gekennzeichnet, dass** die transparente Abdeckung (3) eine tiefgezogene transparente Folie (12) aufweist, deren Vertiefungen (7) auf der einem Beobachter (4) abgewandten Seite mit optical-bonding-Material (8) ausgefüllt sind.

10. Anzeigeeinrichtung nach Anspruch 9, **dadurch gekennzeichnet, dass** die tiefgezogene transparente Folie (12) eine getönte Kunststofffolie ist.

11. Anzeigeeinrichtung nach einem der vorhergehenden Ansprüche, **dadurch gekennzeichnet, dass** die transparente Abdeckung (3) eine getönte Abdeckung ist.

## Claims

1. Display device having:
- a carrier plate (1) having a cutout (6) and spatially separated two-dimensional first display regions (10); and
- an optoelectronic display (5), which is arranged on the observer side behind the carrier plate (1) and has a two-dimensional second display region (11) covering the cutout (6) in the carrier plate (1);
**characterized by**:
- a transparent covering (3), which covers the first and second display regions (10, 11) and, on its observer side, is configured three-dimensionally with regions having different thicknesses, wherein image planes (9, 13) of the first and second display regions (10, 11) are visually emphasized for an observer (4) in regions of greater thickness of the transparent covering (3) as compared to regions of lower thickness, and wherein the transparent covering (3) is connected to the carrier plate (1) and the optoelectronic display (5) by way of optical bonding, wherein the refractive index of the material of the transparent covering (3) corresponds to the refractive index of the optical-bonding material (8).

2. Display device according to Claim 1, **characterized in that** the two-dimensional first display regions (10) are formed by digits and/or characters and/or symbols applied onto a carrier plate (1).

3. Display device according to Claim 2, **characterized in that** the two-dimensional first display regions (10) are one or more dials.

4. Display device according to either of Claims 2 and 3, **characterized in that** the two-dimensional first display regions (10) have scales (2).

5. Display device according to Claim 4, **characterized in that** the transparent covering (3) and the carrier plate (1) have through-openings that are associated with the scales (2) and through which pointer spindles, which are drivable such that they can rotate and which have pointers on the observer side, are guided.

6. Display device according to one of the preceding claims, **characterized in that** the two-dimensional first and second display regions (10, 11) are arranged, on the observer side, in one plane.

7. Display device according to one of the preceding claims, **characterized in that** the carrier plate (1) is a thin carrier plate (1) or is a film-type carrier plate (1).

8. Display device according to one of the preceding claims, **characterized in that** the transparent covering (3) is an injection-moulded component.

9. Display device according to one of Claims 1 to 7, **characterized in that** the transparent covering (3) has a deep-drawn transparent film (12), the depressions (7) of which on the side facing away from an observer (4) are filled with optical bonding material (8).

10. Display device according to Claim 9, **characterized in that** the deep-drawn transparent film (12) is a tinted plastics film.

11. Display device according to one of the preceding claims, **characterized in that** the transparent covering (3) is a tinted covering.

## Revendications

1. Dispositif d'affichage muni :
- d'une plaque support (1) munie d'un évidement (6) et de premières zones d'affichage planes (10) séparées dans l'espace ; et
- d'un écran optoélectronique (5) agencé derrière la plaque support (1) du côté de l'observateur, muni d'une deuxième zone d'affichage plane (11), qui recouvre l'évidement (6) dans la plaque support (1) ;
**caractérisé par** :
- une couverture transparente (3), qui recouvre les premières et deuxièmes zones d'affichage (10, 11) et est configurée, du côté de l'observateur, sous forme tridimensionnelle avec des zones d'épaisseur différente, des plans d'image (9, 13) des premières et deuxièmes zones d'affichage (10, 11) étant accentués optiquement pour un observateur (4) dans des zones de plus grande épaisseur de la couverture transparente (3) par rapport à des zones de plus petite épaisseur, et la couverture transparente (3) étant reliée par collage optique (« optical bonding ») avec la plaque support (1) et l'écran optoélectronique (5), l'indice de réfraction du matériau de la couverture transparente (3) correspondant à l'indice de réfraction du matériau de collage optique (8).

2. Dispositif d'affichage selon la revendication 1, **caractérisé en ce que** les premières zones d'affichage planes (10) sont formées par des chiffres et/ou des caractères et/ou des symboles appliqués sur une plaque support (1).

3. Dispositif d'affichage selon la revendication 2, **caractérisé en ce que** les premières zones d'affichage planes (10) sont un ou plusieurs cadrans.

4. Dispositif d'affichage selon l'une quelconque des revendications 2 et 3, **caractérisé en ce que** les premières zones d'affichage planes (10) comprennent des graduations (2).

5. Dispositif d'affichage selon la revendication 4, **caractérisé en ce que** la couverture transparente (3) et la plaque support (1) comprennent des ouvertures de passage associées aux graduations (2), au travers desquelles des axes d'aiguille pouvant être entraînés en rotation sont passés, qui portent des aiguilles du côté de l'observateur.

6. Dispositif d'affichage selon l'une quelconque des revendications précédentes, **caractérisé en ce que** les premières et deuxièmes zones d'affichage planes (10, 11) sont agencées dans un plan du côté de l'observateur.

7. Dispositif d'affichage selon l'une quelconque des revendications précédentes, **caractérisé en ce que** la plaque support (1) est une plaque support mince (1) ou une plaque support de type feuille (1).

8. Dispositif d'affichage selon l'une quelconque des revendications précédentes, **caractérisé en ce que** la couverture transparente (3) est un composant moulé par injection.

9. Dispositif d'affichage selon l'une quelconque des revendications 1 à 7, **caractérisé en ce que** la couverture transparente (3) comprend une feuille transparente emboutie (12), dont les creux (7) sont remplis sur le côté détourné d'un observateur (4) avec du matériau de collage optique (8).

10. Dispositif d'affichage selon la revendication 9, **caractérisé en ce que** la feuille transparente emboutie (12) est une feuille de matière plastique teintée.

11. Dispositif d'affichage selon l'une quelconque des revendications précédentes, **caractérisé en ce que** la couverture transparente (3) est une couverture teintée.
